# EUROPÄISCHE PATENTSCHRIFT

(11) **EP 3 092 356 B1**
(45) Veröffentlichungstag und Bekanntmachung des Hinweises auf die Patenterteilung: **05.06.2019**
(21) Anmeldenummer: 14815565.8
(22) Anmeldetag: 11.11.2014
(51) Int. Cl.: B32B 37/10, B32B 37/12, E04F 15/04, E04F 15/02, B32B 38/10

(54) **VERFAHREN ZUR HERSTELLUNG EINER FUSSBODENDIELE**
METHOD FOR PRODUCING A FLOORBOARD
PROCEDE DE PRODUCTION D'UNE LATTE DE REVETEMENT DE SOL

(30) Priorität: 27.11.2013 DE 102013113130
(43) Veröffentlichungstag der Anmeldung: 16.11.2016
(73) Patentinhaber: Välinge Innovation AB, 263 65 Viken (SE)
(72) Erfinder: SCHULTE, Guido, 59602 Rüthen-Meiste (DE)
(74) Vertreter: Välinge Innovation AB
(86) Internationale Anmeldenummer: PCT/DE2014/100397
(87) Internationale Veröffentlichungsnummer: WO 2015/078443

(56) Entgegenhaltungen:
- EP-A2- 2 415 947
- WO-A1-2009/015682
- US-A1- 2008 000 179

## Beschreibung

Die Erfindung betrifft ein Verfahren zur Herstellung einer Fußbodendiele, welche eine Trägerplatte und ein oberseitiges Furnier aufweist.

Fußbodendielen mit einer Nutzschicht bzw. Decklage aus Echtholz kommen insbesondere als Echtholzböden oder Parkettböden zum Einsatz. Solche Fußböden verbreiten ein natürliches Wohnklima. Sie sind angenehm fußwarm und gleichen Feuchtigkeitsschwankungen in der Raumluft aus, wodurch sie zu einem wohngesunden Raumklima beitragen. Auch als Fußbodendielen mit einer Nutzschicht bzw. Decklage aus Kork bzw. einem Korkfurnier sind sehr beliebt.

Ein Verfahren zur Herstellung von Parkett- oder Furnierfußbodenplatten mit einer Decklage aus Echtholz ist in der DE 102 45 914 A1 beschrieben. Dort wird eine Decklage aus Echtholz einer Imprägnierung mit duroplastischen Kunstharzen unterworfen. Nach der Imprägnierung wird die Decklage auf die Trägerplatte geklebt. Ferner wird die Decklage bedruckt.

Gängig sind Fußbodenpaneele mit einem Dreischichtaufbau und profilierten Fügeflächen an den Seitenrändern zur Ausbildung von Verbindungsmitteln in Form von Nut und Feder oder einem sogenannten Klicksystem. Die Verbindungsmittel ermöglichen eine mechanische Koppelung der einzelnen Paneele untereinander innerhalb eines Bodenbelags oder einer Wand- bzw. Deckenverkleidung. Die Trägerplatte besteht üblicherweise aus einem Holzwerkstoff, insbesondere einer hoch verdichteten Faserplatte (HDF). Die oberseitige Deckschicht aus Echtholz kann unterschiedlich stark sein. Bei einer Dicke der Deckschicht aus Holz von mehr als 2,5 mm spricht man von einem Parkettfußboden. Nach einer üblichen fachterminologischen Einteilung beginnen Furniere für Deckschichten von Fußbodenpaneelen bei etwa 0,4 mm. Grundsätzlich werden Fußbodenpaneele mit Holzdeckschichten von kleiner als 2,5 mm als Echtholz- oder Furnierboden bezeichnet.

Nach dem Aufkleben des Furniers werden Fehlstellen in der Oberfläche, beispielsweise Astlöcher, Spalten oder Risse ausgespachtelt. Üblicherweise spachtelt man mit einem Überschuss an Spachtelmasse, der dann später wieder abgetragen wird. Dies erfolgt üblicherweise durch schleifen oder bürsten. Dies birgt insbesondere bei dünnen Furnierschichten die Gefahr, dass die Schicht durch die nachträgliche mechanische Bearbeitung beschädigt wird. Aus diesem Grund setzt man daher häufig von vornherein dickere Furniere ein oder man sortiert mit Fehlstellen behaftete Furniere von vornherein aus. Dies ist jedoch unökonomisch und führt zudem dazu, dass die Varianzbreite des optischen Erscheinungsbildes der Naturholzböden geschmälert wird.

Bekannt ist auch ein sogenanntes Echtholzlaminat. Dort wird auf die Deckschicht aus Furnier ein Overlay aufgetragen, beispielsweise in Form eines Melaminpapiers oder - films. Anschließend wird dieses Sandwich verpresst. Nachteilig hieran ist, dass die bei diesem Produkt im Furnier natürlich vorhandenen Fehlstellen wie Spalten, Risse, Äste oder Poren oft milchig in der Optik erscheinen. Ursächlich hierfür ist der fehlende bzw. ungenügende Pressdruck beim Pressvorgang, weil im Bereich der Fehlstellen der Gegendruck fehlt. Arbeitet man hingegen mit höherem Pressdruck, dominiert die Struktur des Pressbleches die Holzoberfläche und die natürliche Holzstruktur bzw. -optik leidet.

Die EP 2 415 947 A2 offenbart ein Verfahren zur Herstellung einer Fußbodendiele, welche eine Trägerplatte und ein oberseitiges Furnier aufweist, dort als Kern bezeichnet sowie einen Oberflächenstreifen aufweist. Bei dem Oberflächenstreifen kann es sich um ein Furnier handeln. Das Oberflächenmaterial kann auch Linoleum, Gewebe, Kunststoff oder Hochdrucklaminat sein. Zwischen Kern und Oberflächenschicht kann eine Ausgleichschicht vorgesehen sein. Die einzelnen Oberflächenstreifen sind mit einem Zwischenraum zwischen sich auf den Kern geklebt.

Durch die WO 2009/015682 A1 zählt ein Fußbodenpaneel und ein Verfahren zur Herstellung eines Fußbodenpaneels zum Stand der Technik, bei dem harzimprägnierte, insbesondere papierene Schichten, mit einer Trägerplatte verpresst werden. Vor der Verpressung werden mindestens einer Schicht transparente und leitfähige Pigmente beigegeben, so dass mindestens eine Schicht solche Pigmente enthält.

Die US 2008/0000179 A1 beschreibt Fußbodendielen mit einem Kern und einem Oberflächenbelag. Zur dekorativen Gestaltung der Kantenbereiche der Fußbodendiele ist der Oberflächenbelag im Kantebereich entfernt.

Der Erfindung liegt ausgehend vom Stand der Technik die Aufgabe zugrunde, ein rationelles Verfahren zur Herstellung von Fußbodendielen mit einem oberseitigen Furnier aufzuzeigen, welches eine Material- und Kostenersparnis ermöglicht.

Die Lösung dieser Aufgabe besteht in einem Verfahren gemäß Anspruch 1. Vorteilhafte Ausgestaltungen, Weiterbildungen und Aspekte der Erfindung sind Gegenstand der abhängigen Ansprüche 2 bis 14.

Die vorliegende Erfindung bezieht sich auf ein Verfahren zur Herstellung einer Fußbodendiele gemäß Anspruch 1.

Der Pressvorgang bei dem die Lagen des Mehrschichtkörpers miteinander verpresst und verbunden werden, wird mit folgenden Prozessparametern durchgeführt:
- der Pressdruck ist vorzugsweise größer oder gleich (≥) 1.000 Kilopascal (kPa), höchst vorzugsweise größer oder gleich (≥) 3.500 Kilopascal (kPa),
- die Presstemperatur ist größer oder gleich (≥) 100 °C, insbesondere größer oder gleich (≥) 120 °C, und liegt vorzugsweise im Temperaturbereich zwischen 180°C und 210 °C,
- die Presszeit liegt vorzugsweise zwischen 10 und 60 Sekunden.

Beim Verpressen des Mehrschichtkörpers wird das Harz der Harzschicht unter dem Temperatureinfluss plastifiziert und ausgehärtet. Mittels des Harzes werden die Ausgangsträgerplatte und die Holzfurniere miteinander verklebt. Des Weiteren werden die Spalte zwischen den Furnieren mit Harz verfüllt.

Zur Fertigung einer erfindungsgemäßen Fußbodendiele wird eine großflächige Ausgangsträgerplatte bereitgestellt. Eine großflächige Ausgangsträgerplatte bedeutet, dass diese eine Größe in Länge und Breite besitzt, ein dem eines Mehrfachen, insbesondere eines ganzzahlig Mehrfachen, der Größe einer Fußbodendiele entspricht.

Bei der Ausgangsträgerplatte und demzufolge bei der Trägerplatte einer Fußbodendiele handelt es sich um ein Plattenmaterial aus einem Holzwerkstoff, wie beispielsweise Massivholz, Spanholz, Holzfaserwerkstoff, MDF (Medium Density Fiber Board) oder HDF (High Density Fiber Board). Bevorzugt kommt im Rahmen der Erfindung eine Trägerplatte aus HDF zum Einsatz. Denkbar sind auch Trägerplatten aus wasserfesten Materialien, zum Beispiel auf Basis mineralischer Werkstoffe, wie Faser-Zement, Sand-Bindegemische oder Holz-Kunstoff-Verbundwerkstoffe (Wood-Plastic-Composites WPC) sowie Holzfaser-Polymer-Verbundwerkstoffe oder auch die Verwendung von Magnesitplatten. Ein Aspekt zielt hier auf die Verwendung von naturfaserverstärktem Kunststoff als Werkstoff für die Trägerplatte bzw. die Basisträgerplatte ab. Neben Holzfasern können hier auch andere Pflanzenfasern, wie Jute oder Flachs verwendet werden, insbesondere in einem Holzfaser- oder Holzmehlanteil von 50% bis 90% und einem Kunststoffmatrix aus Polypropylen (PP). Ferner kann ein Holz-Kunststoff-Verbundwerkstoff auf Basis von thermoplastisch verarbeitbaren Duroplasten, die modifiziertes Melaminharz mit Naturfaser- bzw. Naturmehlanteil Verwendung finden. In diesem Zusammenhang bietet auch Bamboo Plastic Composites (BPC) interessante praktische Ansätze. Bei diesem Werkstoff kommen Bambusfasern bzw. Bambusmehl als Naturwerkstoff zum Einsatz.

Wie bereits erwähnt, können auch Platten auf Basis zementhaltiger Bindemittel bzw. Faserzementplatten als Trägerplatte Verwendung finden. Ebenso wie Magnesitplatten. Magnesitplatten bestehen aus einem Gemisch von Magnesiumoxyd, Kalziumcarbonat, Silikaten sowie Fasern, insbesondere Holz- und/oder Glasfasern. Ein Vorteil von Magnesitplatten ist das geringe Gewicht und das geringe Wärmeleitungsvermögen, ebenso wie ihre Feuerfestigkeit. Magnesitplatten werden als nichtbrennbar eingestuft.

Ausgangsprodukt bei der Fertigung von erfindungsgemäßen Fußbodendielen ist eine großflächige Trägerplatte, vorliegend als Ausgangsträgerplatte bezeichnet. Eine solche großflächige Ausgangsträgerplatte ist rechteckig konfiguriert und hat eine Größe von 2.000 mm bis 5.600 mm in der Länge und 1.200 mm bis 2.100 mm in der Breite. Üblicherweise besitzt die Trägerplatte bzw. die Ausgangsträgerplatte eine Dicke von 4,5 mm bis 12 mm.

Ein wesentlicher Aspekt der Erfindung ist, dass zwischen der Trägerplatte und dem Furnier eine Harzschicht vorgesehen ist und die Trägerplatte, die Harzschicht und das Furnier miteinander verpresst und miteinander verbunden sind. Die Furniere sind hierbei auf der Trägerplatte mit einem seitlichen Abstand zueinander positioniert, so dass zwischen den Furnieren ein Spalt ausgebildet ist. Das Furnier ist vom Harz der Harzschicht durchdrungen bzw. infiltriert. Das Verpressen erfolgt heiß bei einer Temperatur von mehr als 100 °C, insbesondere mehr als 120 °C, vorzugsweise bei einer Temperatur zwischen 180 °C und 210 °C. Die Presstemperatur bezieht sich auf die Temperatur am Pressblech der Presse. Diese Temperatur steht auch an den Kontaktflächen des Pressblechs mit der Oberseite des Furniers bzw. der Unterseite der Trägerplatte an.

Die Harzschicht besteht aus Harz. Hierbei handelt es sich insbesondere um ein duroplastisches Kunstharz. Es können farbige oder transparente Melaminharze oder Melamin/Polyurethan-Harz-Gemische zur Anwendung gelangen. Ein Aspekt der Erfindung zielt darauf ab, dass Harze zum Einsatz kommen, die unter Hitze und Druck aushärten bzw. reagieren. In diesem Zusammenhang bietet sich die Verwendung von aminoplastischen, duroplastischen oder Reaktivharzen, wie Polyurethan (PUR) oder thermoplastisches Polyurethan an. Das Harz kann auf einem papierförmigen Träger in Form eines Papierimprägnats vorliegen, auch Harzpapier genannt. Das Harz bzw. die Harzschicht kann des Weiteren als Harzfilm vorliegen bzw. ausgebildet sein.

Die Furniere werden als Streifen oder Platten bereitgestellt. Auf der Ausgangsträgerplatte werden die Furniere mit einem seitlichen Abstand zueinander positioniert unter Ausbildung eines Spaltes. Hierbei werden die Furniere so angeordnet bzw. positioniert, dass sich jeweils in Abstand der Breite einer aus der Ausgangsträgerplatte abzuteilenden Fußbodendiele ein in Längsrichtung über die Ausgangsträgerplatte durchgehender Spalt entsteht. Es wird ein Mehrschichtkörper gebildet, umfassend die Ausgangsträgerplatte und die Furniere. Zwischen der Ausgangsträgerplatte und den Furnieren wird eine Harzschicht eingegliedert. Unterseitig der Ausgangsträgerplatte wird eine Gegenzuglage angeordnet. Der so gebildete Mehrschichtkörper wird anschließend in einer Presse verpresst, so dass Ausgangsträgerplatte, Harzschicht, Furniere und Gegenzuglage verbunden werden. Das Verpressen des Mehrschichtkörpers erfolgt in einer Presse und zwar bei einem Pressdruck von größer oder gleich (≥) 1.000 Kilopascal (kPa). Vorzugsweise liegt der Pressdruck oberhalb von 3.500 Kilopascal (kPa). Die Presstemperatur ist größer oder gleich (≥) 100 °C, insbesondere größer oder gleich (≥) 120 °C. Vorzugsweise liegt die Presstemperatur zwischen 180 °C und 210 °C. Die Presstemperatur bezieht sich auf die Temperatur am Pressblech der Presse. Im Rahmen des erfindungsgemäßen Verfahrens liegt die Presszeit, bei der der Mehrschichtkörper in der Presse mit Druck beaufschlagt wird, zwischen 10 Sekunden und 60 Sekunden.

Beim Pressvorgang kann die Oberfläche der Furniere durch ein Strukturblech oder einen Strukturgeber eine Struktur, ein Muster oder Ornamente erhalten. Die Struktur kann im Glanzgrad in Teilbereichen variieren. Weiterhin sind verschiedene Strukturtiefen möglich. Die Strukturtiefe kann bis 0,6 mm betragen. Bezogen auf die Furnierstärke kann die Struktur eine Strukturtiefe von 2/3 der Furnierstärke besitzen.

Nach dem Pressvorgang wird der verpresste Mehrschichtkörper in einzelne Dielen geteilt. Die Trennung des Mehrschichtkörpers in einzelne Dielen erfolgt im Bereich eines Spalts zwischen zwei benachbarten Furnieren. Die Trennung erfolgt folglich in dem mit ausgehärtetem Harz verfüllten Spalt zwischen zwei Furnieren, der sich über die Länge der Ausgangsträgerplatte erstreckt. Die Breite der einzelnen Furniere ist auf die Breite einer abzuteilenden einzelnen Fußbodendiele abgestimmt.

Das Aufteilen des verpressten Mehrschichtkörpers erfolgt nach dem Abkühlen. Hierzu kann der Mehrschichtkörper über eine Kühlstrecke geführt oder zum Abkühlen zwischengelagert werden.

Die einzelnen Dielen werden in einem nachfolgenden Arbeitsschritt an ihren Seitenrändern profiliert. Das Profilieren erfolgt erst nach Abkühlung der Trägerplatte auf Raumtemperatur. Das Profilieren dient insbesondere zur Ausbildung von Verbindungsmitteln an den Längs- und Schmalseiten der Paneele.

Beim Profilieren kann der sich entlang einer Fußbodendiele als Randstreifen aus Harz erstreckende Rest des Spaltes vollständig entfernt werden. Weiterhin ist es möglich, dass entlang der Seitenränder des Furniers ein Randstreifen aus Harz bestehen bleibt. Die Randstreifen aus Harz setzen sich optisch vom Furnier ab. Zudem ist der Randstreifen vorteilhaft bei der mechanischen Bearbeitung der Seitenränder. Da die Seitenrandbereiche der Dielen durch das Harz stabilisiert sind, ist eine mechanische Bearbeitung vorteilhaft möglich. Insbesondere kann ein Ausfransen des Furniers vermieden werden.

Als Presse kommt insbesondere eine Kurztakt-Presse zum Einsatz oder auch eine kontinuierliche Presse. Beim Heißpressvorgang bzw. Pressvorgang unter Temperatureinfluss wird die Harzschicht plastifiziert und penetriert in das Furnier. Ein wesentlicher Aspekt der Erfindung besteht darin, dass das Harz der Harzschicht das Furnier bis zur Oberseite des Furniers durchdringt. Hierbei werden im Furnier vorhandene Poren, Risse, Spalten und/oder sonstige Fehlstellen beim Pressvorgang mit Harz verfüllt. Das Harz der Harzschicht bildet eine unlösbare Verbindung zwischen dem Furnier und der Trägerplatte. Ein besonderer Vorteil der Erfindung besteht folglich darin, dass zwei Fertigungsschritte, nämlich Kleben und Spachteln des Furniers, gemeinsam in einem Arbeitsvorgang durchgeführt werden.

Insbesondere wird das Verpressen des Mehrschichtkörpers so ausgeführt, dass das Furnier mit Harz durchtränkt und nach dem Verpressen Harz an der Oberfläche des Furniers sichtbar ist. In diesem Zusammenhang kommen insbesondere auf die Farbe des Furniers farblich abgestimmte Harze zur Anwendung. Produkttechnisch wird ein schwarzes Harz als universell und vorteilhaft angesehen. Zweckmäßigerweise wird das Verpressen so ausgeführt, dass die Oberfläche des Furniers und damit der Fußbodendiele nur mit sehr wenig Harz oder gar keinem Harz behaftet ist. Poren, Risse, Spalten oder sonstige Fehlstellen sind sichtbar ausgefüllt. Es tritt jedoch kein oder zumindest nur sehr wenig überschüssiges Harz an der Oberfläche aus. Das verpresste Produkt braucht dann nur noch strukturgebürstet werden und erhält gegebenenfalls eine Oberflächenbeölung oder -lackierung.

Im Rahmen der Erfindung kann die Harzschicht durch ein Harzpapier gebildet sein. Das Harzpapier besteht aus einem Papier mit einem Papiergewicht von 30 g/m² bis 120 g/m². Dieses Papier wird mit Harz getränkt und hat dann mindestens das Doppelte bis Dreifache an Gewicht, vorzugsweise hat das Harzpapier ein Gewicht von mehr als 100 g/m². Es handelt sich mithin um ein stark überschussbeharztes Papierimprägnat. Das Harzpapier wird zwischen Ausgangsträgerplatte und den Furnieren eingegliedert. Hierzu werden die Produkte schichtweise einschließlich der Gegenzuglage zusammengeführt. Anschließend wird der Mehrschichtkörper verpresst.

Eine Alternative sieht vor, die Harzschicht durch einen oberseitig auf die Ausgangsträgerplatte aufgebrachten Harzfilm zu bilden. Hierbei wird Harz flüssig auf die Ausgangsträgerplatte aufgetragen und angetrocknet bzw. vorkondensiert. Der Harzfilm haftet auf der Ausgangsträgerplatte als gel- bzw. wachsartige Schicht.

Weiterhin kann die Harzschicht auch unterseitig auf den Furnieren in Form eines Harzfilms ausgebildet sein. Auch hierbei wird Harz flüssig auf eine Seite der Furniere aufgetragen. Hierdurch werden die Furniere mit Harz imprägniert. Das flüssig aufgetragene Harz wird angetrocknet und vorkondensiert. Das so imprägnierte und mit der Harzschicht versehene Furnier wird nach dem Herstellen der Harzschicht der Weiterverwendung zugeführt. Vor der Bildung des Mehrschichtkörpers werden die Furniere gedreht, so dass die Harzschicht unterseitig der Furniere ist und mit der Oberseite der Ausgangsträgerplatte in Kontakt gelangt.

Ein Harzfilm kann auch durch einen Auftrag von Harz in Pulverform auf die Oberfläche der Ausgangsträgerplatte oder auf die Furniere gebildet sein. Das pulverförmige Harz wird dann unter Temperatureinfluss angeliert, so dass sich der Harzfilm ausbildet.

Generell kann das Harz auch pastös, also in Form einer Paste vorliegen und verarbeitet werden.

Die Menge an Harz ist so dosiert, dass sie das Furnier infiltriert bzw. durchschlägt, jedoch durch die zugefahrene Presse nicht auf die Oberfläche des Furniers austreten kann. Poren, Fehlstellen, Risse oder Spalten im Furnier sind mit Harz verpresst und ausgefüllt. Die natürliche Holzoberfläche oder Korkoberfläche und -struktur bleibt erhalten. Das Harz kann mit einem Füllstoff angedickt sein. Hierdurch ist mehr Masse vorhanden, um Poren, Risse, Spalten und/oder Fehlstellen auszufüllen. Als Füllstoff können organische oder anorganische Materialien zum Einsatz gelangen, insbesondere mineralische Pigmente, Steinmehl oder Kreide, ebenso wie Holzpuder oder Holzmehl.

Die Gegenzuglage gleicht Spannungen im Mehrschichtkörper aus. Bei der Gegenzuglage kann es sich um ein Furnier, ein Papier, eine Folie oder auch einen Film, insbesondere einen Kunstharzfilm handeln. Zweckmäßigerweise ist ein Gegenzugfurnier oder ein Gegenzugpapier ebenfalls beharzt bzw. mit Kunstharz imprägniert. Die Gegenzuglage wird bei der Herstellung der erfindungsgemäßen Fußbodendielen gemeinsam mit der Ausgangsträgerplatte, den Furnieren und der Harzschicht verpresst und unterseitig mit der Ausgangsträgerplatte verbunden.

Die Fußbodendielen sind an ihren Seitenrändern profiliert und mit Verbindungsmitteln versehen. Verbindungsmittel können als Nut und Federn ausgestaltet sein. Vorzugsweise sind die Seitenränder mit einer Klickverbindung versehen. Weiterhin können die Dielen an ihren oberseitigen Rändern umlaufend mit einer Fase versehen sein. Bei einer Fußbodendiele mit Fase wirkt sich die Harzzwischenschicht sehr positiv bezüglich der Feuchtigkeitsabdichtung im verlegten Produkt aus.

Eine farbliche Gestaltung der Fußbodendiele ist weiterhin möglich, wenn an den Seitenrändern das Harz sichtbar bleibt. Insbesondere erfolgt dies durch ein farbiges Harz, welches farblich auf das Furnier abgestimmt ist. Hierbei können einzelne oder alle Seitenränder mit einem optisch sichtbaren Randstreifen aus Harz ausgebildet sein. Eine Varianz in der optischen Gestaltung einer Paneele ergibt sich, wenn ein Harz verwendet wird, welches farblich im Kontrast zur Farbe des Furniers steht. Hierdurch kann beispielsweise eine Fugenoptik gezielt erzeugt werden. Durch das Zusammenspiel von Harz und Furnier ist eine optische Akzentuierung der Oberfläche eines erfindungsgemäßen Fußboden-, Wand- oder Deckenpaneels möglich. Hierfür können im Harz auch Effektmaterialien, wie erwähnt Pigmente und andere Füllstoffe, eingesetzt werden.

Ein Aspekt besteht weiterhin darin, die Fase als dekorative optisch abgrenzende Kante auszubilden. Weiterhin kann das Furnier mit einem Dekor bedruckt sein. Vorzugsweise erfolgt das Bedrucken mittels Digitaldruck. Hierbei kommt ein auf die verwendeten Harze abgestimmtes System von Drucktinten zur Anwendung. Möglich ist es, auf das Furnier eine Versiegelung aufzutragen. Als Versiegelung wird der Auftrag einer Farbe, einer Beize, eines Öls oder auch eines Lack- bzw. Lacksystemen verstanden.

Besonders vorteilhaft ist, dass eine Fußbodendiele bzw. die Oberfläche des Furniers nach dem Verpressen einer mechanischen Oberflächenbearbeitung unterzogen werden kann. Im Rahmen einer Oberflächenbearbeitung erfolgt insbesondere ein Schleifen oder ein Bürsten der Oberfläche. Hierdurch kann die natürliche Optik der Oberfläche akzentuiert werden. Durch eine unregelmäßige Oberflächenbearbeitung kann eine gealterte Struktur bzw. Optik eine sogenannte Vintage Optik erzielt werden. Die Oberfläche der Dielen kann so beispielsweise eine sägeraue Oberfläche besitzen oder Rattermarken bzw. Schleiffehler oder ähnliches aufweisen.

Eine nach dem erfindungsgemäßen Verfahren hergestellt Fußbodendiele ist kostengünstig in der Fertigung und qualitativ hochwertig. Besonders vorteilhaft wirkt sich aus, dass auf dem Einsatz von großflächigen, auf die Abmessungen einer Ausgangsträgerplatte abgestimmten vernähten oder verklebten Furnieren verzichtet werden kann. Die Aufteilung der Ausgangsträgerplatte in einzelne Fußbodendielen erfolgt entlang der zwischen den Holzfurnieren ausgebildeten harzbefüllten Spalte.

Die Dielen bestechen durch ihre natürliche Holzoptik bzw. Korkoptik mit einem rustikalen Charakter infolge der optisch wahrnehmbaren, verfüllten Risse, Spalten und/oder Astlöcher. Da das Furnier, also die oberseitige Nutz- bzw. Decklage des Paneels mit Harz durchtränkt bzw. imprägniert ist, wird zudem die Widerstandsfähigkeit, insbesondere die Eindruckbeständigkeit und die Durchriebbeständigkeit erhöht. Durch die hohe Widerstandsfähigkeit ist eine mechanische Bearbeitung des Furniers, wie durch schleifen oder bürsten, möglich und zwar bei verringerter Gefahr, dass die Optik durch die mechanische Bearbeitungsvorgänge zerstört wird. Die Dielen sind deutlich widerstandsfähiger. Die Erfindung ermöglicht in vorteilhafter Weise auch den Einsatz von weicheren Holzarten bzw. Furniere aus weicheren Hölzern, wie Lärche. Durch die Harzimprägnierung bzw. -durchtränkung wird ein Furnier aus einem weichen Holz in der Härte erhöht und widerstandsfähiger.

Im Rahmen der Erfindung können auch vorteilhaft gedämpfte oder geräucherte Furniere verwendet werden. Besonders geeignet sind ferner Furniere aus grobporigen Hölzern, wie Eiche, Esche, Lärche oder Fichte ebenso wie Furniere aus Kork. Die Furniere werden durch die erfindungsgemäße Harzinfiltrierung in der Qualität verbessert und optisch akzentuiert.

Die Erfindung ist nachfolgend anhand von Zeichnungen beschrieben. Es zeigen:
- Figur 1: eine Draufsicht teilweise in einem Schnitt auf einen Mehrschichtkörper vor dem Verpressen
- Figur 2: die Darstellung des Mehrschichtkörpers nach dem Verpressen;
- Figur 3: eine Draufsicht auf einzelne Fußbodendielen;
- Figur 4: in vergrößerter Darstellung den Bereich der Längsseite zweier benachbarter Fußbodendielen mit korrespondierenden Verriegelungsmitteln und
- Figur 5: wiederum in vergrößerter Darstellung den Bereich der Längsseite zweier benachbarter Fußbodendielen in einer weiteren Ausführungsform.

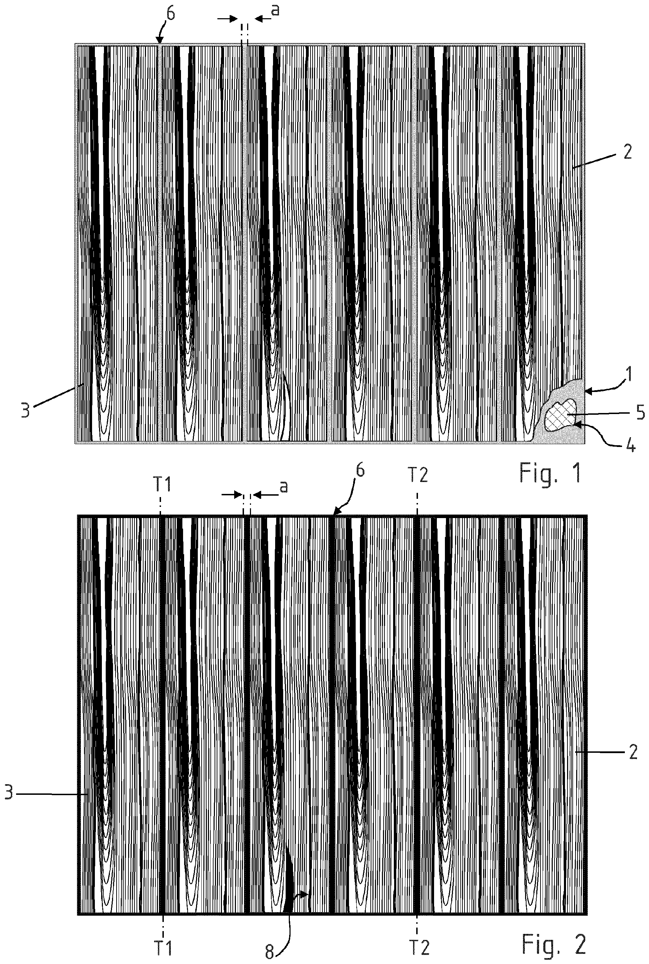

Zur Herstellung von erfindungsgemäßen Fußbodendielen wird ein Mehrschichtkörper gebildet. Der Mehrschichtkörper umfasst eine großfläche Ausgangsträgerplatte 1. Die Ausgangsträgerplatte 1 ist in der Figur 1 zu erkennen. Die Ausgangsträgerplatte 1 ist rechteckig konfiguriert. Gängige Ausgangsträgerplatten 1 haben eine Länge zwischen 2.000 mm bis 5.600 mm bei einer Breite von 1.200 mm bis 2.100 mm. Üblicherweise besitzt die Ausgangsträgerplatte 1 eine Dicke von 4,5 mm bis 12 mm. Oberseitig auf die Ausgangsträgerplatte 1 werden Holzfurniere 2, 3 aufgelegt. Unterseitig der Ausgangsträgerplatte 1 wird eine in der Figur 1 nicht dargestellte Gegenzuglage vorgesehen. Zwischen der Ausgangsträgerplatte 1 und den Holzfurnieren 2, 3 ist eine Harzschicht 4 aus Harz 5 vorgesehen. Das Harz 5 bzw. die Harzschicht 4 ist in der Figur 1 schematisch angedeutet. Die Harzschicht 4 erstreckt sich flächig über die Ausgangsträgerplatte 1.

Auf die Ausgangsträgerplatte 1 werden die einzelnen Holzfurniere 2, 3 als Streifen aufgelegt. Diese erstrecken sich über die gesamte Länge der Ausgangsträgerplatte 1. Zwischen der Ausgangsträgerplatte 1 und den Furnieren 2, 3 ist die Harzschicht 4 aus Harz 5 eingegliedert. Es handelt sich insbesondere um ein duroplastisches Kunstharz. Die Harzschicht 4 kann durch ein Harzpapier gebildet sein. Eine Alternative besteht darin, die Harzschicht 4 durch einen oberseitig auf die Ausgangsträgerplatte 1 aufgetragenen Harzfilm zu bilden. Des Weiteren kann die Harzschicht 4 durch einen unterseitig auf die Furniere 2, 3 aufgetragenen Harzfilm gebildet werden.

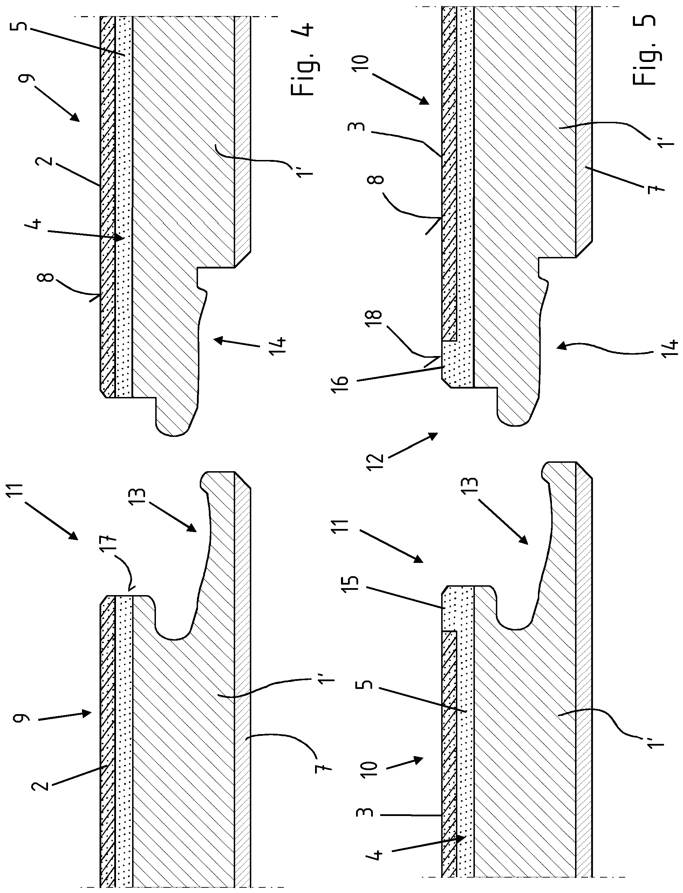

Die einzelnen Furniere 2, 3 liegen mit einem seitlichen Abstand a zueinander, so dass zwischen den einzelnen Furnieren 2, 3 ein Spalt 6 ausgebildet wird. Unterseitig der Ausgangsträgerplatte 1 wird, wie erwähnt, die Gegenzuglage angeordnet. Eine Gegenzuglage 7 ist in den Figuren 4 und 5 zu erkennen. Die Ausgangsträgerplatte 1 mit den aufgelegten Furnieren 2, 3 und der dazwischen vorgesehenen Harzschicht 4 sowie die Gegenzuglage 7 bilden den Mehrschichtkörper. Dieser wird einer Presse zugeführt und dort verpresst. Der Pressdruck ist größer oder gleich 1.000 KPa, vorzugsweise größer oder gleich 3.500 KPa. Die Presstemperatur ist größer oder gleich 100 °C, insbesondere größer oder gleich 120 °C. Vorzugsweise liegt die Presstemperatur zwischen 180 °C und 210 °C. Die Presszeit kann zwischen 10 und 60 Sekunden liegen.

Die Figur 1 zeigt den Mehrschichtkörper vor dem Verpressen. Die Figur 2 zeigt den Mehrschichtkörper nach dem Verpressen. Beim Verpressen des Mehrschichtkörpers wird das Harz 5 der Harzschicht 4 unter dem Temperatureinfluss plastifiziert und ausgehärtet. Mittels des Harzes 5 werden die Ausgangsträgerplatte 1 und die Holzfurniere 2, 3 miteinander verklebt. Des Weiteren werden die Spalten 6 zwischen den Furnieren 2, 3 mit Harz 5 verfüllt. Weiterhin infiltriert das Harz 5 die Holzfurniere 2, 3. Das Harz 5 durchdringt die Furniere 2, 3 bis zu deren Oberseite bzw. Oberfläche 8. Hierbei werden in den Furnieren 2, 3 vorhandene Poren, Risse, Spalten und/oder sonstige Fehlstellen mit Harz 5 verfüllt. Die Furniere 2, 3 sind mit Harz 5 durchtränkt, so dass nach dem Verpressen Harz 5 an der Oberfläche 8 der Furniere 2, 3 sichtbar ist.

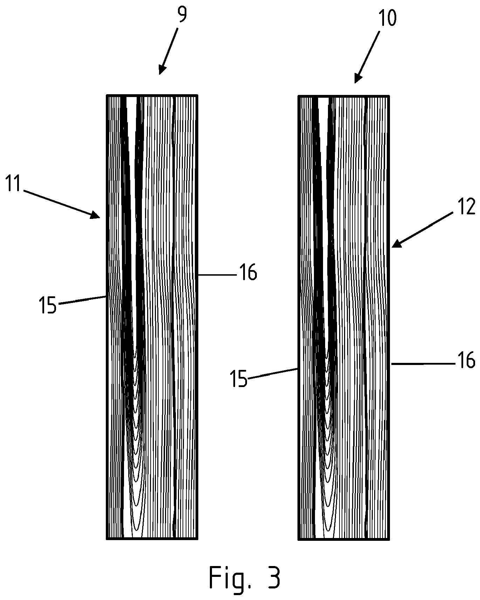

Nach dem Pressvorgang wird der verpresste Mehrschichtkörper in einzelne Fußbodendielen 9, 10 geteilt. Einzelne Fußbodendiele 9, 10 sind in der Figur 3 dargestellt. Das Trennen des Mehrschichtkörpers in einzelne Fußbodendielen 9, 10 erfolgt im Bereich jeweils eines Spaltes 6 zwischen zwei benachbarten Furnieren 2, 3. Exemplarisch sind in der Figur 2 zwei Trennlinien T1, T2 angedeutet, die sich über die Länge der Ausgangsträgerplatte 1 jeweils entlang eines mit ausgehärtetem Harz 5 verfüllten Spaltes 6 erstrecken.

In einem nachfolgenden Arbeitsschritt werden die Seitenränder 11, 12 der Fußbodendielen 9, 10 profiliert. Beil Profilieren werden die Seitenränder 11, 12 mit Verbindungsmitteln 13, 14 versehen. Verbindungsmittel 13, 14 sind in den Figuren 4 und 5 zu erkennen. Beim Profilieren kann der sich entlang einer Fußbodendiele 9, 10 als Randstreifen 15, 16 aus Harz 5 erstreckende Rest des Spaltes 6 vollständig entfernt werden. Möglich ist es auch, dass entlang der Seitenränder 11, 12 der Furniere 2, 3 ein Randstreifen 15, 16 aus Harz 5 stehen bleibt.

Zu erwähnen ist, dass das Harz 5 mit einem Füllstoff angereichert werden kann. Ferner kann die Oberfläche der Fußbodendielen 9, 10 mit einem Dekor bedruckt werden. Auch können die Seitenränder 11, 12 bzw. Randstreifen 15, 16, die aus hartem Harzmaterial bestehen, bedruckt werden. Die Oberfläche der Fußbodendielen 9, 10 kann mit einer Versiegelung versehen werden. Weiterhin kann die Oberfläche der Fußbodendielen 9, 10 einer mechanischen Oberflächenbearbeitung, insbesondere einem Schleifvorgang und/oder einem Bürstvorgang und/oder einem Prägevorgang unterzogen werden. Die vorgenannten Maßnahmen dienen zur optischen Akzentuierung und Strukturierung der Oberfläche.

Die Figuren 4 und 5 verdeutlichen schematisch den Aufbau von erfindungsgemäß hergestellten Fußbodendielen 9, 10 in ihrer Vertikalebene. Die Figuren sind nicht maßstäblich zu verstehen.

Jede Fußbodendiele 9, 10 weist eine Trägerplatte 1' auf, auf deren Oberseite ein Furnier 2 bzw. 3, nämlich ein Holzfurnier aufgebracht ist. Die Trägerplatte 1' und das Holzfurnier 2, 3 sind über eine Harzschicht 4 aus Harz 5 vollflächig miteinander verpresst und verklebt. Unterseitig der Trägerplatte 1' ist die Gegenzuglage 7 vorgesehen. An den Seitenrändern 11, 12 der Fußbodendielen 9, 10 sind Verbindungsmittel 13, 14 in Form von Verriegelungsleisten vorgesehen. Bei einem Fußbodenbelag benachbarten Fußbodendielen 9, 10 kommen die jeweils korrespondierenden Verriegelungsleisten miteinander in Eingriff. In den Figuren 4 und 5 sind die Verriegelungsleisten an zwei einander gegenüberliegenden Längsseiten einer Fußbodendiele 9, 10 dargestellt. Die Fußbodendielen 9, 10 weisen auch an ihren jeweiligen Kopfseiten Verriegelungsmittel auf, die jedoch hier nicht zu erkennen sind.

Die Trägerplatte 1' und das oberseitige Holzfurnier 2, 3 sowie die Trägerplatte 1' und die unterseitige Gegenzuglage 7 sind miteinander thermisch verpresst und unlösbar miteinander verklebt. Die Verklebung zwischen Trägerplatte 1' und Holzfurnier 2, 3 erfolgt über das eingegliederte Harz 5. Auch die Gegenzuglage 7 ist mit der Trägerplatte 1' über ein Harz 5 verklebt.

Die Fußbodendielen 9, 10 sind wie zuvor beschrieben hergestellt. Die einzelnen Fußbodendielen 9, 10 werden aus dem verpressten Mehrschichtkörper abgeteilt. Hierbei wird der Mehrschichtkörper entlang der sich über die gesamte Länge erstreckenden Spalte 6 getrennt.

Bei der Fußbodendiele 9, wie in der Figur 4 zu erkennen, ist beim Profilieren der Seitenränder 11, 12 ein nach dem Trennen am Seitenrand 11 bzw. 12 stehen gebliebender Randstreifen 16 aus Harz 5 bzw. Spaltrest entfernt worden. Holzfurnier 2 und Harzschicht 4 schließen bündig mit der oberen Stirnseite 17 der Seitenränder 11, 12 ab.

Bei der Fußbodendiele 10, wie in der Figur 5 dargestellt, ist an den Seitenrändern 11, 12 des Holzfurniers 3 jeweils ein Randstreifen 15, 16 ausgebildet. Diese Randstreifen 15, 16 bestehen aus Harz 5. Die Oberfläche 18 der Randstreifen 15, 16 verläuft in der Ebene der Oberfläche 8 des Holzfurniers 3.

Wie bereits ausgeführt, werden bei der Herstellung der Fußbodendielen 9, 10 die Ausgangsträgerplatte 1 bzw. die Trägerplatte 1', das Holzfurnier 2, 3, die Gegenzuglage 7 mit jeweils dazwischen vorgesehenem Harz 5 unter Temperatureinfluss miteinander verpresst. Beim Pressvorgang wird das Harz 5 plastifiziert. Das zwischen Ausgangsträgerplatte 1 und Holzfurnier 2, 3 befindliche Harz 5 infiltriert das Holzfurnier 2, 3. Hierbei kann das Harz 5 das Holzfurnier 2, 3 bis zur Oberfläche 8 des Holzfurniers 2, 3 durchdringen. Im Holzfurnier 2, 3 vorhandene Poren, Risse, Spalten und/oder Fehlstellen werden beim Verpressen mit Harz 5 verfüllt. Es erfolgt das Verkleben des Holzfurniers 2, 3mit der Ausgangsträgerplatte 1 und das Spachteln der Oberfläche 8 des Holzfurniers 2, 3 gemeinsam in einem Arbeitsvorgang beim Verpressen des Mehrschichtkörpers.

### Bezugszeichen:

- 1 -: Ausgangsträgerplatte
- 1' -: Trägerplatte
- 2 -: Holzfurnier
- 3 -: Holzfurnier
- 4 -: Harzschicht
- 5 -: Harz
- 6 -: Spalt
- 7 -: Gegenzuglage
- 8 -: Oberfläche von 2, 3
- 9 -: Fußbodendiele
- 10 -: Fußbodendiele
- 11 -: Seitenrand
- 12 -: Seitenrand
- 13 -: Verbindungsmittel
- 14 -: Verbindungsmittel
- 15 -: Randstreifen
- 16 -: Randstreifen
- 17 -: Stirnseite von 11, 12
- 18 -: Oberfläche von 15, 16

- a -: Abstand
- T1 -: Trennlinie
- T2 -: Trennlinie

## Patentansprüche

1. Verfahren zur Herstellung einer Fußbodendiele (9, 10), welche eine Trägerplatte (1') und ein oberseitiges Furnier (2, 3) aufweist, mit dem Schritt:
- Bereitstellen einer großflächigen Ausgangsträgerplatte (1);
- Bereitstellen einer Anzahl von Furnieren (2, 3);
- **gekennzeichnet durch** folgende Schritte : Bildung eines Mehrschichtkörpers aus der Ausgangsträgerplatte (1) und den Furnieren (2, 3) sowie einer zwischen der Ausgangsträgerplatte (1) und den Furnieren (2, 3) vorgesehenen Harzschicht (4) aus Harz (5), wobei benachbarte Furniere (2, 3) unter Ausbildung eines Spalts (6) beabstandet zueinander auf der Ausgangsträgerplatte (1) positioniert werden sowie einer unterseitig der Ausgangsträgerplatte (1) angeordneten Gegenzuglage (7);
- Verbinden von Ausgangsträgerplatte (1), Harzschicht (4) und Furnieren (2, 3) sowie Gegenzuglage (7) durch Verpressen des Mehrschichtkörpers in einer Presse, wobei das Verpressen bei einer Presstemperatur von mehr als 100 °C erfolgt
und
- beim Verpressen des Mehrschichtkörpers das Harz (5) die Furniere (2, 3) infiltriert und das Harz (5) das Furnier (2, 3) bis zur Oberseite des Furniers (2, 3) durchdringt und Poren, Risse und/oder Spalte im Furnier (2, 3) mit Harz (5) verfüllt werden;
- anschließend der verpresste Mehrschichtkörper in einzelne Dielen (9, 10) getrennt wird, wobei die Trennung im Bereich eines Spalts (6) zwischen zwei benachbarten Furnieren (2, 3) durchgeführt wird und
- die Dielen (9, 10) an ihren Seitenrändern (11, 12) profiliert und mit Verbindungsmitteln (13, 14) versehen werden.

2. Verfahren nach Anspruch 1, **dadurch gekennzeichnet, dass** beim Verpressen des Mehrschichtkörpers
- ein Pressdruck größer oder gleich (≥) 1.000 Kilopascal (kPa), vorzugsweise größer oder gleich (≥) 3.500 Kilopascal (kPa), ist und
- eine Presszeit zwischen 10 und 60 Sekunden liegt.

3. Verfahren nach Anspruch 1 oder 2, **dadurch gekennzeichnet, dass** die Presstemperatur größer oder gleich (≥) 120 °C, beträgt, vorzugsweise zwischen 180°C und 210 °C liegt

4. Verfahren nach wenigstens einem der Ansprüche 1 bis 3, **dadurch gekennzeichnet, dass** beim Verpressen des Mehrschichtkörpers die Spalte (6) zwischen den Furnieren (2, 3) mit Harz (5) verfüllt werden.

5. Verfahren nach wenigstens einem der Ansprüche 1 bis 4, **dadurch gekennzeichnet, dass** die Harzschicht (4) durch ein Harzpapier gebildet wird.

6. Verfahren nach wenigstens einem der Ansprüche 1 bis 4, **dadurch gekennzeichnet, dass** die Harzschicht (4) durch einen oberseitig auf die Ausgangsträgerplatte (1) aufgetragenen Harzfilm gebildet wird.

7. Verfahren nach wenigstens einem der Ansprüche 1 bis 4, **dadurch gekennzeichnet, dass** die Harzschicht (4) durch einen unterseitig auf die Furniere (2, 3) aufgetragenen Harzfilm gebildet wird.

8. Verfahren nach wenigstens einem der Ansprüche 1 bis 7, **dadurch gekennzeichnet, dass** das Verpressen des Mehrschichtkörpers so ausgeführt wird, dass das Furnier (2, 3) mit Harz (5) durchtränkt und nach dem Verpressen Harz (5) an der Oberfläche (8) des Furniers (2, 3) sichtbar wird.

9. Verfahren nach wenigstens einem der Ansprüche 1 bis 8, **dadurch gekennzeichnet, dass** beim Profilieren der Seitenränder (11, 12) der Fußbodendielen (9, 10) ein nach dem Trennen am Seitenrand (11, 12) verbliebener harzbefüllter Spaltrest entfernt wird.

10. Verfahren nach wenigstens einem der Ansprüche 1 bis 8, **dadurch gekennzeichnet, dass** beim Profilieren der Seitenränder (11, 12) der Fußbodendielen (9, 10) ein Randstreifen (15, 16) aus Harz (5) ausgebildet wird.

11. Verfahren nach wenigstens einem der Ansprüche 1 bis 10, **dadurch gekennzeichnet, dass** ein mit einem Füllstoff angereichertes Harz (5) verwendet wird.

12. Verfahren nach wenigstens einem der Ansprüche 1 bis 11, **dadurch gekennzeichnet, dass** die Oberfläche der Fußbodendiele (9, 10) mit einem Dekor bedruckt wird.

13. Verfahren nach wenigstens einem der Ansprüche 1 bis 12, **dadurch gekennzeichnet, dass** auf die Oberfläche der Fußbodendielen (9, 10) eine Versiegelung aufgetragen wird.

14. Verfahren nach wenigstens einem der Ansprüche 1 bis 13, **dadurch gekennzeichnet, dass** die Oberfläche der Fußbodendielen (9, 10) einer mechanischen Oberflächenbearbeitung, insbesondere einem Schleifvorgang und/oder einem Bürstvorgang und/oder einem Prägevorgang, unterzogen werden.

## Claims

1. Method for producing a floorboard (9, 10) comprising a carrier plate (1') and a topside veneer (2, 3), said method comprising the step:
- providing an extensive starting carrier plate (1),
- providing a plurality of veneers (2, 3),
- **characterized by** the following steps:
forming a multilayer body from the starting carrier plate (1) and the veneers (2, 3) and a resin layer (4) of resin (5) provided between the starting carrier plate (1) and the veneers (2, 3), wherein adjacent veneers (2, 3) are positioned spaced apart from each other on the starting carrier plate (1) such that a gap (6) is formed, and a balancing layer (7) arranged on a bottom side of the starting carrier plate (1),
- joining starting carrier plate (1), resin layer (4) and veneers (2, 3) as well as balancing layer (7) by pressing the multilayer body in a press, wherein pressing is carried out at a pressing temperature of more than 100°C,
and
- during pressing of the multilayer body the resin (5) infiltrates the veneers (2, 3) and the resin (5) penetrates the veneer (2, 3) up to the top side of the veneer (2, 3) and pores, cracks and/or gaps in the veneer (2, 3) are filled with resin (5);
- subsequently the pressed multilayer body is divided into individual floorboards (9, 10), wherein the division is performed in the region of a gap (6) between two adjacent veneers (2, 3) and
- the floorboards (9, 10) are profiled on side edges (11, 12) thereof and provided with joining means (13, 14).

2. Method according to claim 1, **characterized in that** during the pressing of the multilayer body
- a pressing pressure is greater than or equal to (≥) 1,000 Kilopascal (kPa), preferably greater than or equal to (≥) 3,500 Kilopascal (kPa), and
- a pressing time is between 10 and 60 seconds.

3. Method according to claim 1 or 2, **characterized in that** the pressing temperature is greater than or equal to (≥) 120°C, preferably between 180°C and 210°C.

4. Method according to at least one of claims 1 to 3, **characterized in that** during the pressing of the multilayer body the gaps (6) between the veneers (2, 3) are filled with resin (5).

5. Method according to at least one of claims 1 to 4, **characterized in that** the resin layer (4) is formed by a resin paper.

6. Method according to at least one of claims 1 to 4, **characterized in that** the resin layer (4) is formed by a resin film applied to a top side of the starting carrier plate (1).

7. Method according to at least one of claims 1 to 4, **characterized in that** the resin layer (4) is formed by a resin film applied to a bottom side of the veneers (2, 3).

8. Method according to at least one of claims 1 to 7, **characterized in that** the pressing of the multilayer body is performed such that the veneer (2, 3) is impregnated with resin (5) and resin (5) becomes visible on the surface (8) of the veneer (2, 3) after pressing.

9. Method according to at least one of claims 1 to 8, **characterized in that** during the profiling of the side edges (11, 12) of the floorboards (9, 10) a resin-filled residual gap remaining on a side edge (11, 12) after division is removed.

10. Method according to at least one of claims 1 to 8, **characterized in that** during the profiling of the side edges (11, 12) of the floorboards (9, 10) a border strip (15, 16) made of resin (5) is formed.

11. Method according to at least one of claims 1 to 10, **characterized in that** a filler-enriched resin (5) is used.

12. Method according to at least one of claims 1 to 11, **characterized in that** the surface of the floorboard (9, 10) is printed with a decor.

13. Method according to at least one of claims 1 to 12, **characterized in that** a sealing is applied onto the surface of the floorboards (9, 10).

14. Method according to at least one of claims 1 to 13, **characterized in that** the surface of the floorboards (9, 10) is subjected to a mechanical surface processing, in particular a grinding process and/or a brushing process and/or an embossing process.

## Revendications

1. Procédé de production d'une latte de revêtement de sol (9, 10) qui présente une plaque support (1') et un placage (2, 3) de face supérieure, comportant l'étape de :
- mise à disposition d'une plaque support de sortie (1) de grande surface ;
- mise à disposition d'un nombre de placages (2, 3) ;
- **caractérisé par** les étapes suivantes :
la formation d'un corps multicouche constitué de la plaque support de sortie (1) et des placages (2, 3) ainsi que d'une couche de résine (4) en résine (5), dans lequel placée entre la plaque support de sortie (1) et les placages (2, 3), des placages (2, 3) adjacents sont positionnés sur la plaque support de sortie (1) en formant une fente (6), ainsi que d'une couche de contrepartie (7) disposée sur la face inférieure de la plaque support de sortie (1) ;
- la liaison de la plaque support de sortie (1), de la couche de résine (4), et des placages (2, 3) ainsi que de la couche de contrepartie (7) par compression du corps multicouche dans une presse, dans lequel la compression s'effectue à une température de pressage de plus de 100°C
et
- lors de la compression du corps multicouche, la résine (5) s'infiltre dans les placages (2, 3) et la résine (2,3) pénètre dans le placage (2, 3) jusqu'à la face supérieure du placage (2, 3) et des pores, fissures et/ou fentes dans le placage (2, 3) sont remplis de résine (5) ;
- le corps multicouche compressé est ensuite séparé en lattes (9, 10) individuelles, dans lequel la séparation est réalisée dans la zone d'une fente (6) entre deux placages (2, 3) adjacents et
- les lattes (9, 10) sont profilées sur leurs bords latéraux (11, 12) et dotées de moyens de liaison (13, 14).

2. Procédé selon la revendication 1, **caractérisé en ce que**, lors de la compression du corps multicouche,
- une pression de pressage est supérieure ou égale (≥) à 1000 kilopascals (kPa), de préférence supérieure ou égale (≥) à 3500 kilopascals (kPa), et
- une durée de pressage est comprise entre 10 et 60 secondes.

3. Procédé selon la revendication 1 ou 2, **caractérisé en ce que** la température de pressage est supérieure ou égale (≥) à 120°C, de préférence comprise entre 180°C et 210°C.

4. Procédé selon au moins l'une des revendications 1 à 3, **caractérisé en ce que**, lors de la compression du corps multicouches, les fentes (6) entre les placages (2, 3) sont remplies avec de la résine (5).

5. Procédé selon au moins l'une des revendications 1 à 4, **caractérisé en ce que** la couche de résine (4) est formée par un papier résine.

6. Procédé selon au moins l'une des revendications 1 à 4, **caractérisé en ce que** la couche de résine (4) est formée par un film de résine appliqué du côté supérieur sur la plaque support de sortie (1).

7. Procédé selon au moins l'une des revendications 1 à 4, **caractérisé en ce que** la couche de résine (4) est formée par un film de résine appliqué du côté inférieur sur les placages (2, 3).

8. Procédé selon au moins l'une des revendications 1 à 7, **caractérisé en ce que** la compression du corps multicouche est exécutée de sorte que le placage (2, 3) soit imbibé de résine (5) et la résine (5) soit visible à la surface (8) du placage (2, 3) après la compression.

9. Procédé selon au moins l'une des revendications 1 à 8, **caractérisé en ce que**, lors du profilage des bords latéraux (11, 12) des lattes de revêtement de sol (9, 10), un reste de fente chargé de résine restant sur le bord latéral (11, 12) après la séparation est éliminé.

10. Procédé selon au moins l'une des revendications 1 à 8, **caractérisé en ce que**, lors du profilage des bords latéraux (11, 12) des lattes de revêtement de sol (9, 10), une bande marginale (15, 16) en résine (5) est formée.

11. Procédé selon au moins l'une des revendications 1 à 10, **caractérisé en ce que** l'on utilise une résine (5) enrichie avec une charge.

12. Procédé selon au moins l'une des revendications 1 à 11, **caractérisé en ce que** la surface des lattes de revêtement de sol (9, 10) est imprimée d'un décor.

13. Procédé selon au moins l'une des revendications 1 à 12, **caractérisé en ce qu'**un scellement est appliqué sur la surface des lattes de revêtement de sol (9, 10).

14. Procédé selon au moins l'une des revendications 1 à 13, **caractérisé en ce que** les surfaces des lattes de revêtement de sol (9, 10) sont soumises à un traitement de surface mécanique, en particulier une opération de meulage et/ou une opération de brossage et/ou une opération de gaufrage.
